# EUROPÄISCHE PATENTSCHRIFT

(11) **EP 2 196 508 B1**
(45) Veröffentlichungstag und Bekanntmachung des Hinweises auf die Patenterteilung: **21.09.2011**
(21) Anmeldenummer: 08075926.9
(22) Anmeldetag: 09.12.2008
(51) Int. Cl.: C09D 15/00

(54) **Sperrschicht für die Lackierung von Oberflächen von Holzwerkstoffplatten**
Block layer for the varnishing of surfaces of wood material boards
Couche de blocage pour le laquage de surfaces de plaques en matières dérivées du bois

(43) Veröffentlichungstag der Anmeldung: 16.06.2010
(73) Patentinhaber: Flooring Technologies Ltd., Pieta PTA 9044 (MT)
(72) Erfinder:
(74) Vertreter: Bröseke, Eribert

(56) Entgegenhaltungen:
- EP-A- 1 880 816
- DE-A1- 10 320 765

## Beschreibung

Die Erfindung betrifft Sperrschichten für Lackierungen von geschliffenen oder ungeschliffenen Oberflächen von Holzwerkstoffplatten unter Verwendung eines Primers.

Bei der Verarbeitung von Holzwerkstoffplatten wie MDF- oder HDF-Platten werden hohe Anforderungen an die Oberflächen hinsichtlich Glätte und Toleranzen solcher Holzwerkstoffplatten gestellt. Deshalb werden die Oberflächen vor der Lackierung aufwendig und oft mehrfach vorbereitet.

Wird beispielsweise auf eine ungeschliffene HDF- bzw. MDF-Platte eine Lackschicht aufgetragen, so ergibt sich durch Ungleichmäßigkeiten in deren Oberfläche, wie Dichte, Porosität, Stoffverteilung (z.B. Fasern, Späne, Leim) etc., ein ungleichmäßiger Lackauftrag. Man spricht von "Wolkigkeit".

Um eine bessere Oberflächengüte hinsichtlich der Dickenschwankungen zu erreichen, ist es bekannt, die Oberfläche durch Schleifen zu glätten. Dieser zusätzliche Arbeitsschritt erfordert einen größeren Maschinenpark und macht das Endprodukt teurer.

Eine andere vorbereitende Maßnahme ist das Auftragen von Isolier- und/oder Haftgrundschichten auf die Holzwerkstoffplatten vor deren Lackierung. Es wird eine bessere Verbindung zwischen der Holzwerkstoffoberfläche und dem aufgetragenen Lack erreicht. Doch auch das vorherige Auftragen einer Isolier- und/oder Haftgrundschicht schafft nicht in allen Fällen den gewünschten Erfolg. Es treten weiterhin unregelmäßige "wolkige" Farb- und/oder Helligkeitsunterschiede nach dem Auftragen der Lackschicht auf. Durch erhöhte Auftragsmengen an Isolier- und/oder Haftgrundmaterial, mehrmaliges Auftragen der vorgenannten Materialien und/oder Zwischenschleifen konnten die Ergebnisse nicht wesentlich verbessert werden. Es traten nur unverhältnismäßig hohe Kosten durch den höheren Materialverbrauch und das zusätzliche Schleifen auf.

Der Erfindung liegt die Aufgabe zugrunde, eine Sperrschicht auf Holzwerkstoffplatten, wie MDF- bzw. HDF-Platten zu schaffen, die es ermöglicht, dass nachfolgend aufgetragene Grundierungs- und/oder Lackschichten nur wenig in die Oberfläche der Holzwerkstoffplatten eindringen, vielmehr auf der Sperrschicht "stehen bleiben" und trotzdem einen guten Verbund mit der Oberfläche eingehen.

Erfindungsgemäß wird die Aufgabe durch die kennzeichnenden Merkmale des Anspruchs 1 gelöst. Erfindungsgemäß besteht die Sperrschicht aus einem Primer auf Silanbasis. Vorzugsweise werden Silane, wie Methyltriethoxysilane bzw. Octyltriethoxysilane oder Gemische der vorgenannten Verbindungen eingesetzt. Die nach Hydrolyse und Kondensation erhaltenen Silane werden dafür wässrig gestellt.

In einer besonderen Ausgestaltung der Erfindung werden den Primern 15 bis 25 Gew.%, vorzugsweise etwa 20 Gew.% an Füllstoffen mit Nanokorngröße zugegeben. Geeignet ist beispielsweise Siliziumdioxid. Diese Nanopartikel sind in der Lage auch kleinste Poren in der Holzoberfläche zu schließen.
Der eingesetzte Primer kann in einer besonderen Ausgestaltung der Erfindung noch mit einem Aminosilan als Haftvermittler versetzt werden, um eine gute Bindung zur Holzoberfläche zu erreichen.

Für die Härtung des Primers nach dem Auftragen auf die Oberflächen von ungeschliffenen Holzwerkstoffplatten werden den Primerlösungen Härtungskatalysatoren zugegeben. Ein geeigneter Härtungskatalysator ist Natriumsilikat.

Durch den Auftrag des erfindungsgemäßen Primers als Sperrschicht auf den Oberflächen von Holzwerkstoffplatten werden auf diesen die Höhentoleranzen ausgeglichen und es ist für das Auftragen der nachfolgenden Grundierungs- oder Lackschichten ein gleichmäßiger Untergrund gegeben. Die erfindungsgemäße Sperrschicht stellt sicher, dass zum einen die nachfolgenden Lackschichten fest auf den Oberflächen der Holzwerkstoffplatten haften und zum anderen, dass die Lackschichten nicht unnötig tief in die Oberflächen eindringen. Dadurch ist ein minimaler Bedarf an Lackmaterial gegeben. Mengen von 1 bis 25 g/m² an Silanen vorzugsweise 5 bis 15 g/m² und insbesondere von 8 bis 12 g/m² sind bestens geeignet.

In einer Ausführungsvariarite wurde als Primer das von der Firma inomat GmbH, DE 6450 unter dem Handelsnamen "inobond aqua" vertriebene Produkt eingesetzt. Es erbrachte ausgezeichnete Ergebnisse.

## Patentansprüche

1. Sperrschicht für die Lackierung von ungeschliffenen oder geschliffenen Oberflächen von Holzwerkstoffplatten,
**gekennzeichnet durch**
einen Primer auf Silanbasis und einen Härtungskatalysator.

2. Sperrschicht nach Anspruch 1, **dadurch gekennzeichnet, dass** der Primer aus einem Methyltriethoxysilan, einem Octyltriethoxysilan oder Gemischen dieser Substanzen besteht.

3. Sperrschicht nach Anspruch 1 und 2, **dadurch gekennzeichnet, dass** als Primer durch Hydrolyse und Kondensation erhaltene Silane als wässrige Lösungen eingesetzt werden.

4. Sperrschicht nach mindestens einem der Ansprüche 1 bis 3, **gekennzeichnet durch** Mengen von 1 bis 25 g/m², vorzugsweise 5 bis 15 g/m² und insbesondere 8 bis 12 g/m² an Primer.

5. Sperrschicht nach mindestens einem der Ansprüche 1 bis 4, **gekennzeichnet durch** Primer mit einem Zusatz von Haftvermittlern.

6. Sperrschicht nach Anspruch 5, **gekennzeichnet durch** den Zusatz von Aminosilanen als Haftvermittler.

7. Sperrschicht nach mindestens einem der Ansprüche 1 bis 6, **gekennzeichnet durch** Natriumsilikat als Härtungskatalysator.

8. Sperrschicht nach mindestens einem der Ansprüche 1 bis 7, **gekennzeichnet durch** Füllstoffzusätze mit Nanokorngröße in Mengen von 15 bis 25 Gew.%, vorzugsweise etwa 20 Gew.% zum Primer.

9. Sperrschicht nach Anspruch 8, **gekennzeichnet durch** Siliziumdioxid als Füllstoff.

## Claims

1. Barrier layer for the lacquering of unpolished and polished surfaces of wood material boards,
**characterized by**
a primer on the basis of silane and a curing catalyst.

2. Barrier layer according to claim 1, **characterized in that** the primer consists of a methyltriethoxysilane, an octyltriethoxysilane or a mixture of these substances.

3. Barrier layer according to claim 1 and 2, **characterized in that** silanes in form of aqueous solutions obtained by hydrolysis and condensation are used as primer.

4. Barrier layer according to at least one of the claims 1 to 3, **characterized by** amounts of 1 to 25 g/m², preferably 5 to 15 g/m² and in particular 8 to 12 g/m² of primer.

5. Barrier layer according to at least one of the claims 1 to 4, **characterized by** a primer with an addition of an adhesion promoter.

6. Barrier layer according to claim 5, **characterized by** the addition of aminosilanes as adhesion promoter.

7. Barrier layer according to at least of the claims 1 to 6, **characterized by** sodium silicate as curing catalyst.

8. Barrier layer according to at least of the claims 1 to 7, **characterized by** filling material additives with nano particle size in amounts of 15 to 25 wt%, preferably about 20 wt% to the primer.

9. Barrier layer according to claim 8, **characterized by** silicium dioxide as filling material.

## Revendications

1. Couche de blocage pour le laquage de surfaces non polies ou polies de plaques en matières dérivées du bois, **caractérisée par** une peinture d'apprêt à base de silane et un catalyseur de durcissement.

2. Couche de blocage selon la revendication 1, **caractérisée en ce que** la peinture d'apprêt se compose d'un méthyltriéthoxysilane, d'un octyltriéthoxysilane ou d'un mélange de ces substances.

3. Couche de blocage selon la revendication 1 ou 2, **caractérisée en ce que** l'on utilise, en tant que peinture d'apprêt sous forme de solutions aqueuses, des silanes obtenus par hydrolyse et condensation.

4. Couche de blocage au moins selon l'une quelconque des revendications 1 à 3, **caractérisée par** des quantités de 1 à 25 g/m², de préférence de 5 à 15 g/m² et en particulier de 8 à 12 g/m² de peinture d'apprêt.

5. Couche de blocage selon l'une quelconque au moins des revendications 1 à 4, **caractérisée par** des peintures d'apprêt présentant un ajout de promoteurs d'adhésion.

6. Couche de blocage selon la revendication 5, **caractérisée par** un ajout d'aminosilanes en tant que promoteurs d'adhésion.

7. Couche de blocage selon l'une quelconque au moins des revendications 1 à 6, **caractérisée par** du silicate de sodium en tant que catalyseur de durcissement.

8. Couche de blocage selon l'une quelconque au moins des revendications 1 à 7, **caractérisée par** des additions de charge ayant une taille de grains nanométrique dans des quantités de 15 à 25 % en poids, de préférence d'environ 20 % en poids par rapport à la peinture d'apprêt.

9. Couche de blocage selon la revendication 8, **caractérisée par** du dioxyde de silicium en tant que charge.
